# EUROPEAN PATENT APPLICATION

(11) **EP 4 472 172 A1**
(43) Date of publication of application: **04.12.2024**
(21) Application number: 23765711.9
(22) Date of filing: 09.02.2023
(51) Int. Cl.: H04L 67/10, H04L 67/1095, H04L 41/0663

(54) **TRAFFIC DISASTER RECOVERY BACKUP METHOD, TRAFFIC DISASTER RECOVERY BACKUP SYSTEM AND TOF NODE**

(30) Priority: 07.03.2022 CN 202210216722
(71) Applicant: ZTE Corporation, Shenzhen, Guangdong 518057 (CN)
(72) Inventor: ZENG, Lingling, Shenzhen, Guangdong 518057 (CN); MA, Lijun, Shenzhen, Guangdong 518057 (CN)
(74) Representative: Osterhoff, Utz
(86) International application number: PCT/CN2023/075272
(87) International publication number: WO 2023/169133

(57) **Abstract**

Embodiments of the present application relates to a service disaster recovery backup method, a service disaster recovery backup system and a traffic offload (TOF) node. The service disaster recovery backup method, applied to a first TOF node, includes: after joining a cluster of TOF nodes, querying each TOF node in the cluster for a service data abstract, a keyword in the service data abstract is an identifier of the first TOF node; when the service data abstract is not queried, undertaking, as an activation node, a local breakout service of service data of the first TOF node, selecting a second TOF node as a backup node in the cluster, and publishing the service data abstract with the identifier of the first TOF node as the keyword in the cluster. The service data abstract includes an activation node and a backup node of the service data, the backup node is configured to synchronize the service data of the first TOF node with the first TOF node, and take over the local breakout service of the service data of the first TOF node in response to detecting a failure of the first TOF node.

## Description

### CROSS-REFERENCES TO RELATED APPLICATIONS

This application claims priority to Chinese Patent Application NO. 202210216722.5, filed on March 7, 2022, the entire contents of which are incorporated herein by reference.

### TECHNICAL FIELD

The present application relates to the technical field of communication transmission, and in particular, to a service disaster recovery backup method, a service disaster recovery backup system and a traffic offload node.

### BACKGROUND

Mobile communications are developing rapidly, and 5th Generation mobile communication (5G) era has arrived. The three major 5G applications, including enhanced mobile broadband (eMBB), ultra-reliable and low latency communications (uRLLC) and massive machine type communication (mMTC) have promoted the further rapid growth of mobile data traffic and mobile service diversity. 3rd generation partnership project (3GPP) has defined the complete network architecture of 4G and 5G.

Against the background of the growing demand for low-latency and high-bandwidth services, multi-access edge computing (MEC) technology has received more and more attention. Edge computing technology configures servers at the edge of the wireless network, sinks cloud computing resources to the wireless access network, and shortens the logical distance between user equipment (UE) terminals and service applications (APP), which can not only greatly reduce latency, but also save backhaul network bandwidth. Edge computing effectively integrates mobile communication network and Internet technology and has the characteristics of service localization, short distance, low latency, etc. By deploying edge computing in the mobile network, distributed cloud computing can be formed.

Local breakout refers to offloading traffic from the local network. In many scenarios, such as industrial parks, office parks, campuses, shopping and sports centers, etc., the local breakout needs to be completed near the wireless base station of the 3GPP network to implement edge computing.

A common solution for local breakout of edge computing is to deploy a wireless traffic offload (TOF) function near the wireless base station and connect the wireless TOF function in series between the wireless base station and the data plane of the core network to complete local breakout. If anomalies of the TOF occur, it will interrupt local network data services and cause serious service failures. Therefore, a service disaster recovery backup function has to be provided in the above local breakout scenario.

### SUMMARY

The purpose of the embodiments of the present application is to provide a service disaster recovery backup method, a service disaster recovery backup system and a traffic offload (TOF) node, to realize service disaster recovery backup processing of local breakout.

In order to solve the above technical problem, embodiments of the present application provide a service disaster recovery backup method, applied to a first TOF node, including: after joining a cluster of TOF nodes, querying each TOF node in the cluster for a service data abstract, where a keyword in the service data abstract is an identifier of the first TOF node; and in response to that the service data abstract is not queried, undertaking, as an activation node, a local breakout service of service data of the first TOF node, selecting a second TOF node as a backup node in the cluster, and publishing the service data abstract with the identifier of the first TOF node as the keyword in the cluster, where the service data abstract includes an activation node and a backup node of the service data, the backup node is configured to synchronize the service data of the first TOF node with the first TOF node, and take over the local breakout service of the service data of the first TOF node in response to detecting a failure of the first TOF node.

Embodiments of the present application further provide a service disaster recovery backup method, applied to a second TOF node, including: after joining a cluster of TOF nodes, receiving a service data abstract with an identifier of a first TOF node as a keyword published in the cluster, where the service data abstract includes an activation node and a backup node of service data; in response to detecting that the backup node in the service data abstract is the second TOF node, synchronizing service data of the first TOF node with the first TOF node, and taking over a local breakout service of the service data of the first TOF node after detecting a failure of the first TOF node; and updating the service data abstract, and publishing an updated service data abstract in the cluster.

Embodiments of the present application further provide a service disaster recovery backup system, including: at least one first TOF node and at least one second TOF node. The first TOF node is configured to perform the above service disaster recovery backup method which is applied to the first TOF node, and the second TOF node is configured to perform the above service disaster recovery backup method which is applied to the second TOF node.

Embodiments of the present application further provide a TOF node, including: at least one processor; and a memory communicated with the at least one processor. An instruction executable by the at least one processor is stored in the memory, and the instruction is executed by the at least one processor to enable the at least one processor to perform the above service disaster recovery backup method which is applied to the first TOF node, or perform the above service disaster recovery backup method which is applied to the second TOF node.

Embodiments of the present application further provide a computer-readable storage medium, a computer program is stored in the computer-readable storage medium, when the computer program is executed by a processor, the service disaster recovery backup method which is applied to the first TOF node is implemented, or the service disaster recovery backup method which is applied to the second TOF node is implemented.

In the embodiments of the present application, TOF technology and clustering are integrated, and multiple TOF nodes are used to build a cluster. When joining the cluster, a query is performed to determine whether there is an activation node responsible for the service data of the current node in the current cluster. If the activation node does not exist, TOF node, as the activation node, joins the cluster, undertakes the local breakout service of the service data of the current TOF node, and selects other TOF nodes as backup nodes to achieve disaster recovery backup. In the embodiment of the present application, the service disaster recovery backup of the local breakout are realized; there is no need to change the 3GPP wireless network architecture, it is compatible with various wireless network architectures such as 4G/5G, there is no need to deploy other equipment and introduce complex networking, creatively solving the problem of the service disaster recovery backup for the local breakout of wireless base stations.

### BRIEF DESCRIPTION OF THE DRAWINGS

FIG. 1 is a schematic diagram of an application environment of a service disaster recovery backup method according to an embodiment of the present application.
FIG. 2 is a flow chart of the service disaster recovery backup method according to an embodiment of the present application.
FIG. 3 is a schematic diagram 1 of the service disaster recovery backup method according to an embodiment of the present application.
FIG. 4 is a schematic diagram 2 of the service disaster recovery backup method according to an embodiment of the present application.
FIG. 5 is a schematic diagram 3 of the service disaster recovery backup method according to an embodiment of the present application.
FIG. 6 is a schematic diagram 4 of the service disaster recovery backup method according to an embodiment of the present application.
FIG. 7 is a flow chart of the service disaster recovery backup method according to another embodiment of the present application.
FIG. 8 is a schematic diagram of the service disaster recovery backup method according to another embodiment of the present application.
FIG. 9 is a schematic diagram of a service disaster recovery backup system according to an embodiment of the present application.
FIG. 10 is a schematic structural diagram of a traffic offload (TOF) node according to an embodiment of the present application.

### DETAILED DESCRIPTION OF THE EMBODIMENTS

In order to make the purpose, technical solutions and advantages of the embodiments of the present application clearer, each embodiment of the present application will be described in detail below with reference to the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented. The division of the following embodiments is for the convenience of description and should not constitute any limitation on the specific implementation of the present application. The various embodiments can be combined with each other and referenced with each other on the premise that there is no contradiction.

The terms "first" and "second" in the embodiments of the present application are only used for descriptive purposes and cannot be understood as indicating or implying relative importance or implicitly indicating the number of indicated technical features. Therefore, features defined as "first" and "second" can explicitly or implicitly include at least one of these features. In the description of the present application, the terms "including" and "having" and any variations thereof are intended to cover a non-exclusive inclusion. For example, a system, product or device that includes a series of parts or units is not limited to the listed parts or units, but optionally also includes parts or units that are not listed, or optionally also includes other parts or units inherent to these products or units. In the description of the present application, "a plurality of" means at least two, such as two, three, etc., unless otherwise clearly and specifically limited.

In the existing 3GPP network, when local breakout is performed through traffic offload (TOF) near wireless base stations to implement edge computing, a service disaster recovery backup solution needs to be provided. In the embodiment of the present application, Distributed Hash Table (DHT) technology is combined to build a node DHT cluster with multiple TOF nodes on the local breakout network of the base station, and a service disaster recovery backup method for local breakout of edge computing is creatively proposed.

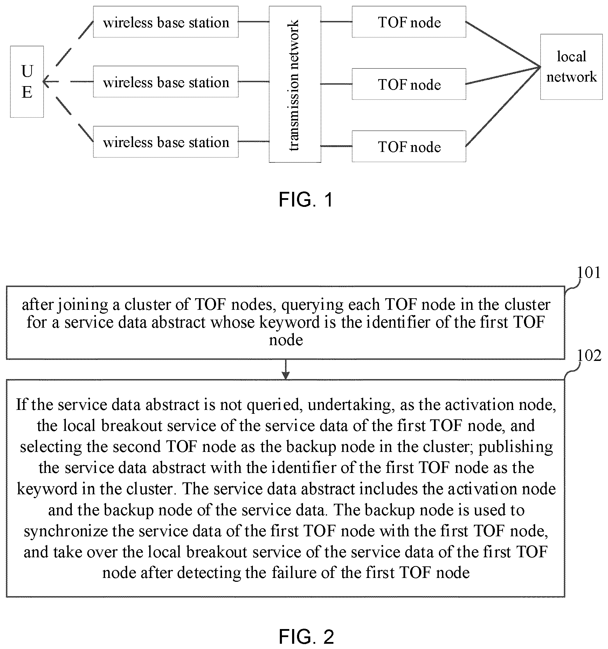

An embodiment of the present application relates to a service disaster recovery backup method, which is applied to a first traffic offload (TOF) node. The application environment of the present application is shown in FIG. 1, the wireless terminal UE accesses the wireless network through the wireless base station, TOF node is deployed near the wireless base station, TOF node can take over multiple wireless base stations, and TOF node and multiple wireless base stations communicate with each other through a transmission network. The traffic between the UE and the local network can realize local service breakout through TOF node. The specific process is shown in FIG. 2.

Step 101, after joining TOF node cluster, querying each TOF node in the cluster for the service data abstract whose keyword is the identifier of the first TOF node.

Step 102, if the service data abstract is not queried, undertaking, via the active node, the local breakout service of the service data of the first TOF node, and selecting a second TOF node as a backup node in the cluster; publishing a service data abstract with the identifier of the first TOF node as the keyword in the cluster. The service data abstract includes the activation node and the backup node of the service data. The backup node is configured to synchronize the service data of the first TOF node with the first TOF node, and take over the local breakout service of the service data of the first TOF node after detecting the failure of the first TOF node.

In this embodiment, TOF technology and clustering are integrated, and multiple TOF nodes are used to build a cluster. When joining the cluster, a query is performed to determine whether there is an activation node responsible for the service data of the current node in the current cluster. If the activation node does not exist, TOF node, as the activation node, joins the cluster, undertakes the local breakout service of the service data of the current TOF node, and selects other TOF nodes as backup nodes to achieve disaster recovery backup. In the embodiment of the present application, the service disaster recovery backup of the local breakout are realized; there is no need to change the 3GPP wireless network architecture, it is compatible with various wireless network architectures such as 4G/5G, there is no need to deploy other equipment, and there is no need to introduce complex networking, creatively solving the problem of the service disaster recovery backup for the local breakout of wireless base stations.

The embodiment of the service disaster recovery backup method in this embodiment are described in detail below. The following content is only implementation details provided for convenience of understanding and is not necessary for implementing this solution.

At step 101, after joining TOF node cluster, each TOF node in the cluster is queried for the service data abstract whose keyword is the identifier of the first TOF node. It mainly involves querying each TOF node in the cluster for the service data abstract whose keyword is the identifier of the first TOF node when joining TOF node cluster.

Each TOF node can run as an independent node without joining the cluster. For each TOF node, the service data generated by the local breakout service flowing through its base station is defined as node data. For example, a call passes through the base station and the local breakout node, and the information generated between the call, the base station and the node is the node data. The node data can be divided into three parts: key, value, and block. The key is a unique identifier (ID) that can distinguish each node, whose components include but are not limited to: the cluster number to which the node belongs, the physical area number of the node in a certain cluster, the node IP address, or a fixed-length hash (HASH) value generated with a unique identifier. The value is a summary of the service data of the node, including but not limited to: the identifier of the current active node of data, the identifier of the current backup node of data, data generation timestamp, the number of data blocks contained in data, auxiliary information of each data block. The auxiliary information of block includes but is not limited to: data checksum and the service type to which the data belongs. Block is the specific content of the service data of the node.

After the first TOF node joins TOF node cluster, it queries each TOF node in the cluster for the service data abstract whose the keyword is the identifier of the first TOF node, that is, querying that the key is the value of the first TOF node. That is, this node queries <key, value> in the cluster to determine whether the service data of this node has been activated on other nodes in the cluster. The key is the identity (ID) of this node. Querying <key, value> means using the key of this node to check whether the value exists.

In an example, the cluster is, for example, a Distributed Hash Table (DHT) cluster. The method also includes: when the first TOF node is the first node of the cluster, building the DHT cluster in the role of a seed node; when the first TOF node is not the first node of the cluster, configuring the seed node in the DHT cluster as an intermediary to join the DHT cluster. Each wireless base station has a home TOF node, and each TOF node can have multiple subordinate base stations to perform local breakout for the data services of UE flowing through these subordinate base stations. Multiple TOF nodes build the DHT cluster. In addition, wireless base stations and local networks can dynamically connect to any wireless TOF node in the cluster. If this node is the first node of the cluster, the cluster will be built as a seed node. If this node is not the first node of the cluster, the seed node in the cluster is configured as an intermediary to join the cluster. If joining fails, keep trying until joining succeeds.

At step 102, if the service data abstract is not queried, undertaking, as the activation node, the local breakout service of the service data of the first TOF node, and selecting the second TOF node as the backup node in the cluster; publishing the service data abstract with the identifier of the first TOF node as the keyword in the cluster. The service data abstract includes the activation node and the backup node of the service data. The backup node is used to synchronize the service data of the first TOF node with the first TOF node, and take over the local breakout service of the service data of the first TOF node after detecting the failure of the first TOF node.

That is, if the service data abstract is not queried, the first TOF node determines whether to serve as the activation node based on the query result of <key, value>. If the destination <key, value> cannot be found, it means that there is no other node in the cluster that activates the service data of this node. Then, for the node data of this node, this node is the activation node and is responsible for the local breakout service of the service data node data, otherwise, this node is not used as the activation node. In addition, after joining the cluster, the first TOF node can be used as the activation node for multiple copies of node data, or can be used as the backup node for multiple copies of node data. The activation node is responsible for the actual service, and the backup node is responsible for the service disaster recovery backup capabilities.

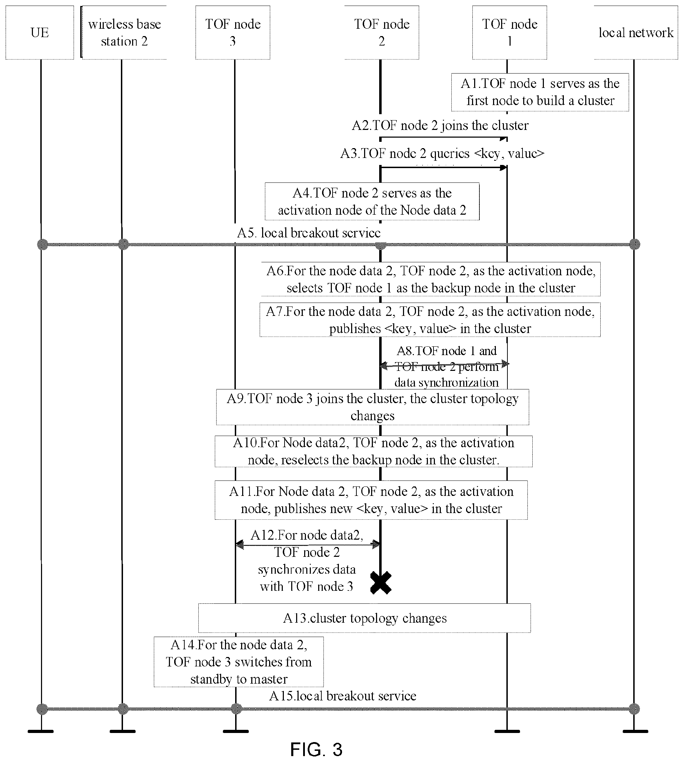

In a specific embodiment, a TOF node 2 serves as the activation node of node data 2 after joining the cluster. TOF node 2 is equivalent to the first TOF node, and TOF node 1 is equivalent to the second TOF node. The execution process is shown in FIG. 3, for example:
A1.TOF node 1 serves as the first node to build a cluster.
A2.TOF node 2 joins the cluster with TOF node 1 as the seed node.
A3.TOF node 2 queries <key, value> in the cluster. The key is ID information that identifies the identity of TOF node 2. If the above <key, value> cannot be found at this time, TOF node 2 will be used as the activation node of the node data 2.
A4. For the node data 2: the UE accesses the wireless base station 2, which belongs to TOF node 2, and TOF node 2 serves as the activation node of the node data 2.
A5. The local breakout service of the data service of the wireless base station 2 is performed by the activation node of the node data 2 (TOF node 2).
A6. For the node data 2, TOF node 2, as the activation node, selects TOF node 1 as the backup node in the cluster.
A7. For the node data 2, TOF node 2, as the activation node, publishes <key, value> in the cluster. The key is the ID information that identifies the identity of TOF node 2, and the backup node information in the value is the ID of TOF node 1.
A8. TOF node 1, as a backup node, initiates P2P data download to the server-side TOF node 2 as a client for data synchronization. TOF node 2 synchronizes the service data to TOF node 1.
A9. After TOF node 3 joins the cluster, the cluster topology changes.
A10. For the node data 2, TOF node 2, as the activation node, updates the backup node to TOF node 3 in the cluster.
A11. For the node data 2, TOF node 2, as the activation node, publishes new <key, value> in the cluster. The key is the ID information that identifies the identity of TOF node 2, and the backup node information in the value is the ID of TOF node 3.
A12. TOF node 3, as a backup node, initiates P2P data download to the server-side TOF node 2 as a client. TOF node 2 synchronizes the service data to TOF node 3. In addition, if TOF node 3 is more suitable as the backup node than TOF node 1, for example, the logical distance to TOF node 2 is shorter, but the strategy is to try not to change the backup node, then the backup node can also be kept as TOF node 1 unchanged.
A13. When an exception occurs in TOF node 2, TOF node 1 and TOF node 3 detect that TOF node 2 exits and the cluster topology changes.
A14. For the node data 2, TOF node 3 switches from standby to master and serves as its activation node. The wireless base station 2 is taken over by TOF node 3.
A15. The data service of the wireless base station 2 completes the local breakout service at TOF node 3.

Specifically, for each piece of node data, as the activation node, the following processing will be performed, including: the activation node is responsible for services such as the service data and local breakout corresponding to the node data. The node updates routes to the wireless base station and the local network respectively, and performs local breakout or traffic offloading service. The activation node selects the backup node in the cluster, and continuously monitors whether the backup node exits the cluster. The activation node continuously monitors the changes in the service data block. If the activation node detects changes in the backup node or block changes, the activation node updates <key, value> and publishes the latest <key, value> in the cluster, where value contains the identifier of the current backup node and current block auxiliary information. In an embodiment, the activation node can periodically publish the latest <key, value>. That is, the activation node can synchronize blocks with the backup node. The synchronization method includes but is not limited to: Peer to Peer (P2P) data download. In addition, whether to start block synchronization can be determined by comparing the locally stored block auxiliary information and the block auxiliary information in the value published by the activation node through the backup node. For example, it is selected to start the block synchronization after the value is updated, that is, after inconsistency is found by the comparison. In an embodiment, the activation node and the backup node can synchronize blocks according to the same cycle.

In an example, after publishing the service data abstract with the identifier of the first TOF node as the keyword in the cluster, the method also includes: updating the service data abstract when it is detected that the backup node exits the cluster or the content of the service data changes, and publishing the updated service data abstract in the cluster. That is, after TOF node joins the cluster, it will continue to monitor cluster topology changes, such as monitoring the access and exit of the node, etc., and detecting whether the content of service data has changed. When the backup node exits the cluster or the service data changes, updating the service data abstract and publishing the updated service data abstract. Specifically, since the service data abstract contains the identifier of the current backup node and relevant content of service data, it is necessary to be updated after the above topology structure or service data changes.

In an example, detection of the backup node exiting the cluster, includes: determining that the backup node exits the cluster when it is detected that the backup node is disconnected and the keep-alive message between the first TOF node and its subordinate base station is normally reachable. That is, when the first TOF node is disconnected from the backup node, but the keep-alive message between the first TOF node and its subordinate base station is normally reachable, it means that the first TOF node can realize information interaction with external data, it is just disconnected from with the backup node. This determines that the backup node exits the cluster.

In an example, in order to achieve monitoring accuracy of cluster topology changes: the cluster is an overlay network layer built on the underlay layer transmission network. As an optional method, the underlay layer independent detection can also be included. When this node detects that other nodes are disconnected (for example, the first TOF node is disconnected from the backup node). If the underlay layer is reachable at this time (for example, the keep-alive message between the first TOF node and the subordinate base station is normally reachable), this node can accurately infer that the disconnected node has exited the cluster. If the underlay layer is unreachable at this time, the node cannot accurately infer that the disconnected node has exited the cluster. The monitoring accuracy of cluster topology changes is improved through independent detection of the underlay layer.

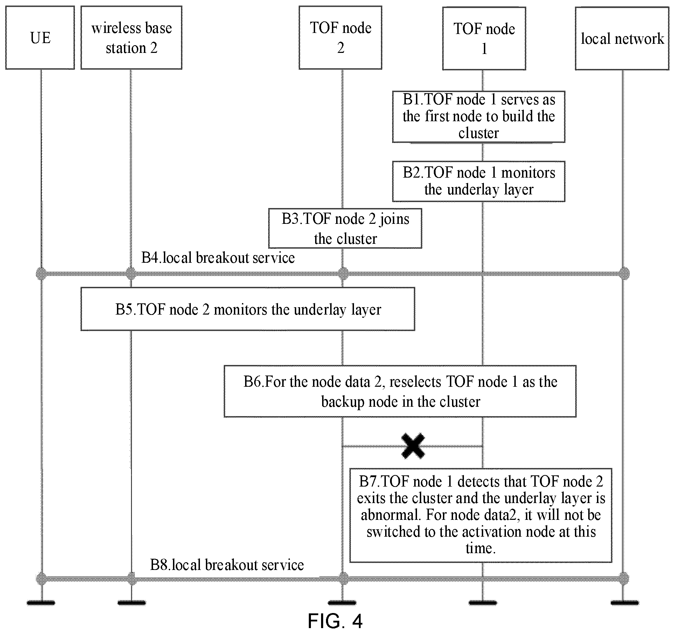

For the above situation where the backup node exits the cluster or the cluster topology changes, an implementation process will be described in detail. For example, TOF nodes 1 and 2 provide independent detection of the underlay layer. As shown in FIG. 4, the main execution steps are as follows:
B1. TOF node 1 serves as the first node to build the cluster. TOF node 1 starts independent detection of the underlay layer, the detection method is to monitor the scheduled keep-alive messages of the wireless base station and this node; if the keep-alive message between any wireless base station communicated with this node by the transmission network and this node is reachable, it means that the underlay layer of this node is normal, otherwise the underlay layer of this node is abnormal.
B2. TOF node 1 continuously monitors the underlay layer.
B3. TOF node 2 joins the cluster with TOF node 1 as the seed node, and TOF node 2 serves as the activation node of the node data 2; for the node data 2, UE accesses the wireless base station 2, which belongs to the wireless TOF node 2.
B4. The local breakout service of the data service of the wireless base station 2 is performed by TOF node 2.
B5. TOF node 2 starts independent detection of the underlay layer, and TOF node 2 continuously monitors the underlay layer.
B6. For the node data 2, TOF node 2, as the activation node, selects TOF node 1 as the backup node in the cluster.
B7. An interruption occurs between TOF node 1 and TOF node 2. TOF node 1 initially detected that TOF node 2 exits the cluster, but at this time the underlay layer of TOF node 1 is abnormal, so for the node data 2, TOF node 1 ultimately does not consider that TOF node 2 exits the cluster and does not switch to the activation node.
B8. For the node data 2, TOF node 2 still performs local traffic offload, that is, local breakout service.

In an example, the second TOF node is selected as the backup node in the cluster, for example, according to the logical distance between the first TOF node and each TOF node in the cluster, the second TOF node is selected as the backup node. After the service data abstract with the identifier of the first TOF node as the keyword is published in the cluster, the method also includes: when it is detected that there is a newly added third TOF node in the cluster, and the logical distance between the third TOF node and the first TOF node is less than the logical distance between the second TOF node and the first TOF node, updating the backup node to the third TOF node; and updating the service data abstract, and publishing the updated service data abstract in the cluster. In addition, if the third TOF node is more suitable as the backup node than the first TOF node, for example, the logical distance to the second TOF node is shorter, but the strategy is to try not to change the backup node, then the backup node can also be kept as the first TOF node unchanged.

That is, the backup node can be selected based on the distance from the activation node, and updates are allowed. For example, the third TOF node is added as a new TOF node, and the distance to the first TOF node (activation node) is close than the distance between the first TOF node and the second TOF node (original backup node), the backup node can be updated to the third TOF node, and the first TOF node (activation node) sends a notification to the second TOF node (original backup node) to update the backup node to the third TOF node. Since the backup node is not limited to a one-to-one relationship with the activation node, that is, one backup node can be used as the backup node for multiple copies of node data. In addition, when the distance to the newly added third TOF node is better than the distance to the second TOF node, the second TOF node and the third TOF node are both used as backup nodes of the first TOF node, which is not limited in the present application.

In an example, selecting the second TOF node as the backup node in the cluster includes: selecting the second TOF node whose node role is the disaster recovery role in the cluster as the backup node.

Specifically, the roles of TOF nodes in the cluster can be different. For example, they can be equal service nodes, or can be divided into different roles such as regular and disaster recovery. The role information is carried in the identity of the node. As an optional method, the regular node is the service provider under normal circumstances, and the disaster recovery node takes over its services when an exception occurs on the regular node. The regular and disaster recovery role information of the node is synchronized within the cluster. For example, the first TOF node carries regular role information, and the second TOF node carrying disaster recovery role information is selected as the backup node.

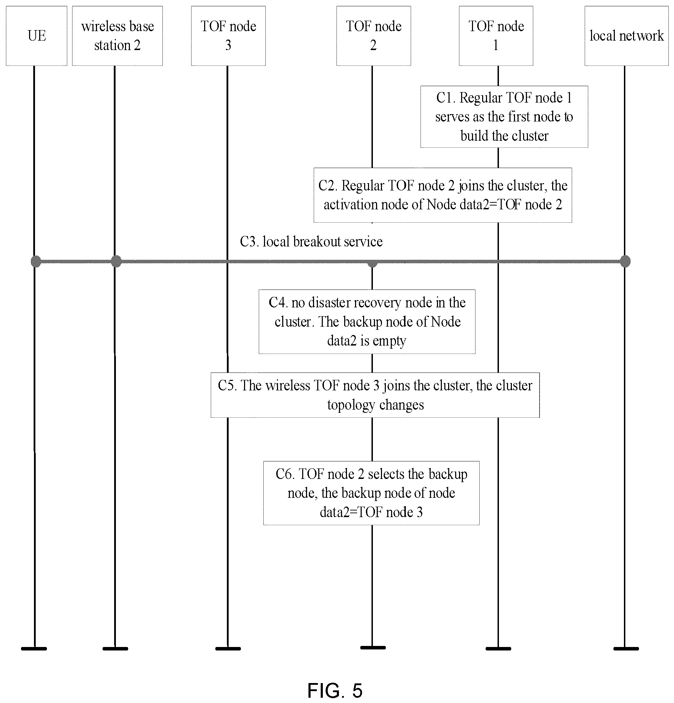

In a specific embodiment, TOF nodes 1 and 2 carry the role information of regular nodes, and TOF node 3 carries the identity information of the disaster recovery node. As shown in FIG. 5, the main execution steps are:
C1. TOF node 1 serves as the first node to build the cluster, and TOF node 1 is the regular node.
C2. TOF node 2 joins the cluster with TOF node 1 as the seed node; TOF node 2 serves as the activation node of node data 2, and TOF node 2 is the regular node; for the node data 2, the UE accesses the wireless base station 2, which belongs to TOF node 2.
C3. The local breakout service of the service data of the wireless base station 2 is performed by TOF node 2.
C4. For the node data 2, when all nodes in the cluster are regular nodes, do not select the backup node.
C5. The wireless TOF node 3 joins the cluster as the disaster recovery node, and the cluster topology changes.
C6. For the node data 2, TOF node 2 selects TOF node 3 with the identity of the disaster recovery node in the cluster as the backup node.

After obtaining the activation node of the service data according to the queried service data abstract, the method also includes: when receiving an instruction to force the first TOF node to be the activation node, undertaking, via the activation node, the local breakout service of the service data, and switching the acquired activation node to the backup node. That is, if the first TOF node detects the presence of the activation node, but receives the instruction to force the first TOF node to be the activation node, it can directly serve as the activation node to undertake the local breakout service of the service data, and switch the previously obtained activation node to the backup node.

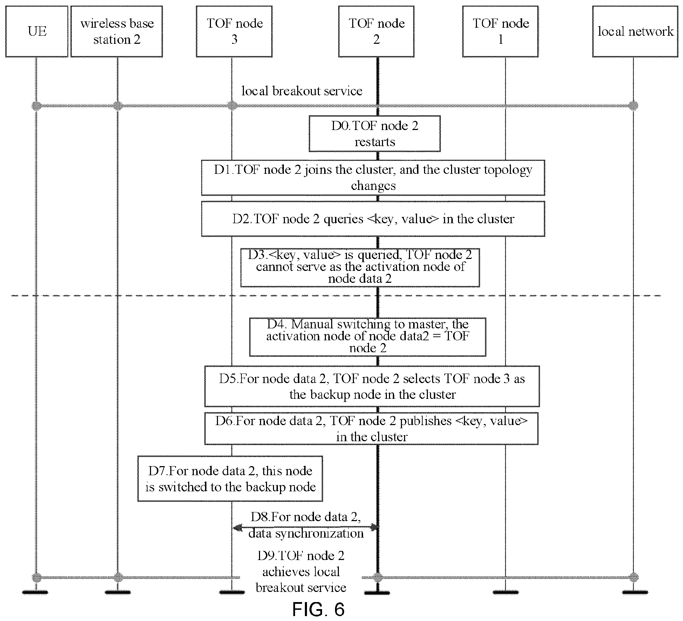

In a specific embodiment, TOF node can receive the instruction for manual forced switching to master or backup during operation, thereby providing support for manual forced intervention processing based on the automatic switching logic of TOF node. For example, the wireless TOF node 2 will not be the activation node for the node data 2 after joining the cluster. The reason is that, for example, after joining TOF node cluster, the service data abstract is queried, that is, there is the activation node corresponding to the queried service data abstract. As shown in FIG. 6, the execution process is, for example, following the steps in FIG. 3. When an exception occurs in TOF node 2, TOF node 1 and TOF node 3 detect that TOF node 2 exits and the cluster topology changes. For the node data 2, TOF node 3 is switched from backup to master, and, as its activation node, re-publishes <key, value>, where key is the data in the original TOF node 2. TOF node 2 can be identified from the key, and there are attribution parameters in value, it will be displayed that the current data belongs to TOF node 2, where the attribution data is consistent with the identity in key, the activation node in value is changed to TOF node 3, the wireless base station 2 is taken over by TOF node 3, and the data service of the wireless base station 2 is completed after TOF node 3 completes the local breakout service. TOF node 2 recovered and restarted successfully after an exception. In addition, value contains attribution parameters, which are used to distinguish between regular and disaster recovery scenarios for each node. In some examples, if TOF node 3, which is a disaster recovery node, activates the node data of a regular node, the disaster recovery node can requery and restore the node data belonging to the aforementioned regular node according to the attribution parameters after reset.

During the execution of local breakout services:
DO.TOF node 2 restarts.
D1.TOF node 2 rejoins the cluster with TOF node 1 as the seed node, and the cluster topology changes.
D2.TOF node 2 queries <key, value> in the cluster, where the key value is the ID of node 2.
D3. At this time, the above <key, value> can be queried from TOF node 3. TOF node 2 cannot serve as the activation node of node data 2. The activation node for node data 2 is still TOF node 3.
D4.TOF node 2 is triggered by manual instructions, forcing manual switching to be the activation node for node data 2.
D5. For node data 2, TOF node 2 selects TOF node 3 as the backup node in the cluster.
D6. For node data 2, TOF node 2 publishes <key, value> in the cluster, where the key value is the ID of TOF node 2, the activation node in value is TOF node 2, and the backup node value is ID of TOF node 3.
D7. For node data 2, since its TOF node 2 is forcibly declared as an activation node, and TOF node 3 is declared as the backup node by the activation node, TOF node 3 is switched to the backup node of node data 2 and enters processing of the backup node.
D8. For node data 2, TOF node 3, as the backup node, initiates P2P data download to server-side TOF node 2 as a client.
D9. For node data 2, the wireless base station 2 is taken over by TOF node 2 again, and the data service of the wireless base station 2 completes local breakout service at TOF node 2.

The UE accesses the wireless network through the wireless base station, and the UE has local network data services. TOF node is deployed near the wireless base station as an independent node to complete local breakout services from the UE to the local network.

The steps of the various methods above are divided just for the purpose of clear description. During implementation, they can be combined into one step or some steps can be split into multiple steps. As long as they include the same logical relationship, they are all within the scope of the present application. Adding insignificant modifications or introducing insignificant designs to the algorithm or process without changing the core design of the algorithm and process are within the scope of the present application.

In the embodiment of the present application, a DHT cluster is constructed between multiple TOF nodes. The activation node selects the backup node in the cluster, publishes the primary and secondary relationships to the cluster, and synchronizes service data with the backup node. After the backup node finds that the activation node exits the cluster, it converts to the activation node and takes over the local breakout service. When TOF node joins the cluster, it first queries the service takeover status in the cluster and confirms whether it is the activation node. Through this solution, the service disaster recovery backup processing of local breakout is finally completed.

In the embodiment of the present application, wireless TOF technology and DHT technology are integrated, and multiple TOF nodes are used to build a DHT cluster to achieve service disaster recovery backup of local breakout. There is no need to change the 3GPP wireless network architecture, and it is compatible with various wireless network architectures such as 4G/5G, there is no need to deploy other equipment and to introduce complex networking. It creatively solves the problem of service disaster recovery backup of local breakout for wireless base stations.

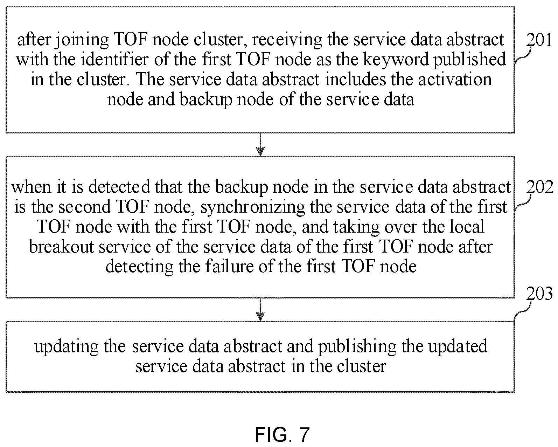

An embodiment of the present application relates to a service disaster recovery backup method, which is applied to the second TOF node, as shown in FIG. 7, including:
Step 201, after joining TOF node cluster, receiving the service data abstract with the identifier of the first TOF node as the keyword published in the cluster. The service data abstract includes the activation node and backup node of the service data. That is, after joining the cluster, the second TOF node first receives and analyzes the abstract published in the cluster.
Step 202, when it is detected that the backup node in the service data abstract is the second TOF node, synchronizing the service data of the first TOF node with the first TOF node, and taking over the local breakout service of the service data of the first TOF node after detecting the failure of the first TOF node.

In some specific implementations, for each piece of node data, the backup node can include the following processing steps, for example: obtaining the <key, value> published by the activation node in the cluster, and identifying this node serves as the backup node of which node data through the identifier of the backup node in value; synchronizing, as the backup node, service data through P2P with the activation node; continuously monitoring, via the backup node, the activation node, if it is detected that the corresponding activation node exits the cluster, this node is switched to the activation node of the node data, and proceeds to the service processing process of the activation node.

In an example, taking over the local breakout service of the service data of the first TOF node after detecting the failure of the first TOF node includes: when it is detected that the first TOF node is disconnected, and the keep-alive message between the second TOF node and the subordinate base station is normally reachable, taking over the local breakout service of the service data of the first TOF node. That is, when the backup node detects that it is disconnected from the activation node, but the keep-alive message with the base station is reachable, it turns into the activation node and receives local breakout services corresponding to the activation node. In addition, after the first node joins TOF node cluster, it queries each TOF node in the cluster for the service data abstract whose keyword is the identifier of the first TOF node. When the service data abstract is queried, optionally, the first TOF node can serve as the second TOF node, that is, the first TOF node can, as the backup node, access TOF node cluster in this case.

Step 203, updating the service data abstract and publishing the updated service data abstract in the cluster. That is, after the backup node is converted into the activation node, the service data abstract published by the original activation node is updated, and the updated service data abstract is published.

After the backup node is converted into the activation node, key of the published <key, value> is the identifier in the original activation node, value has the attribution parameter, which will show that the current data belongs to the original activation node, and the attribution data is consistent with the identity in key. The activation node in value is changed to the current activation node.

In this embodiment, after the second TOF node joins the cluster, it serves as the backup node of the activation node. After the activation node is disconnected, it becomes a new activation node and receives local breakout services corresponding to the activation node to achieve service disaster recovery backup. There is no need to deploy other equipment or introduce complex networking, and creatively solves the problem of service disaster recovery backup of local breakout for wireless base stations.

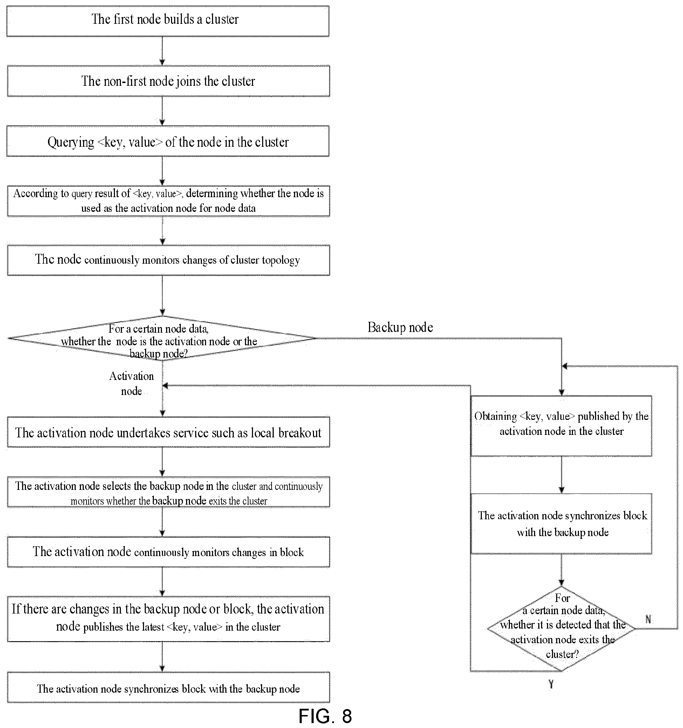

In addition, the embodiments applied to the first TOF node and the second TOF node can be combined with each other. Combined with the above embodiments, when the first TOF node is the activation node and the second TOF node is the backup node. The processing process of the two node roles by the service disaster recovery backup method is shown in FIG. 8.

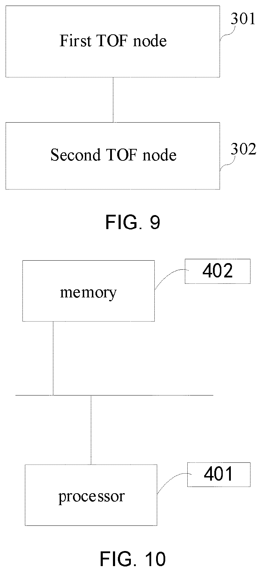

An embodiment of the present application relates to a service disaster recovery backup system, as shown in FIG. 9, including: at least one first TOF node 301 and at least one second TOF node 302. The first TOF node is configured to execute the service disaster recovery backup method applied to the first TOF node as described above, and the second TOF node is configured to execute the service disaster recovery backup method applied to the second TOF node as described above.

It is worth mentioning that each module in this embodiment is a logical module. In practical applications, a logical unit can be a physical unit, or a part of a physical unit, or a combination of multiple physical units. In addition, in order to highlight the innovative part of the present application, units that are not closely related to solving the technical problems raised in the present application are not introduced in this embodiment, but this does not mean that other units do not exist in this embodiment.

An embodiment of the present application relates to a TOF node, as shown in FIG. 10, including at least one processor 401, and a memory 402 communicated with the at least one processor 401. The memory 402 stores an instruction that can be executed by the at least one processor 401, and the instruction is executed by the at least one processor 401 to enable the at least one processor 401 to execute the service disaster recovery backup method applied to the first TOF node as described above, or execute the service disaster recovery backup method applied to the second TOF node as described above.

The memory and the processor are connected using a bus. The bus can include any number of interconnected buses and bridges. The bus connects one or more processors and various circuits of the memory together. The bus can also connect various other circuits together such as peripheral devices, voltage regulators, and power management circuits, which are all well known in the art and therefore will not be described further herein. The bus interface provides the interface between the bus and the transceiver. A transceiver can be one element or multiple elements, such as multiple receivers and transmitters, providing a unit for communicating with various other devices over a transmission medium. The data processed by the processor is transmitted over the wireless medium through the antenna. Further, the antenna also receives data and transmits the data to the processor.

The processor is responsible for managing the bus and general processing, and can also provide a variety of functions, including timing, peripheral interfaces, voltage regulation, power management, and other control functions. The memory can be configured to store data used by the processor when performing operations.

An embodiment of the present application relates to a computer-readable storage medium on which a computer program is stored. The above method embodiments are implemented when the computer program is executed by the processor.

That is, those skilled in the art can understand that all or part of the steps in the methods of the above embodiments can be completed by instructing relevant hardware through a program. The program is stored in a storage medium and includes several instructions to cause a device (which can be a microcontroller, chip, etc.) or a processor to execute all or part of the steps of the methods described in various embodiments of the present application. The aforementioned storage media include: U disk, mobile hard disk, read-only memory (ROM), random access memory (RAM), magnetic disk or optical disk and other media that can store program code..

Those skilled in the art can understand that the above-mentioned embodiments are specific examples for implementing the present application, and in actual applications, various changes can be made in form and details without departing from the scope of the present application.

## Claims

1. A service disaster recovery backup method, applied to a first traffic offload, TOF, node, **characterized by** comprising:
after joining a cluster of TOF nodes, querying each TOF node in the cluster for a service data abstract, wherein a keyword in the service data abstract is an identifier of the first TOF node; and
in response to that the service data abstract is not queried, undertaking, as an activation node, a local breakout service of service data of the first TOF node, selecting a second TOF node as a backup node in the cluster, and publishing the service data abstract with the identifier of the first TOF node as the keyword in the cluster,
wherein the service data abstract comprises an activation node and a backup node of the service data, the backup node is configured to synchronize the service data of the first TOF node with the first TOF node, and take over the local breakout service of the service data of the first TOF node in response to detecting a failure of the first TOF node.

2. The service disaster recovery backup method according to claim 1, further comprising:
in response to that the service data abstract is queried, obtaining the activation node of the service data according to the queried service data abstract; and
synchronizing the service data with the obtained activation node, and taking over the local breakout service of the service data of the activation node in response to a failure of the activation node.

3. The service disaster recovery backup method according to claim 2, wherein after obtaining the activation node of the service data according to the queried service data abstract, the method further comprises:
in response to receiving an instruction instructing to force the first TOF node to be the activation node, undertaking, as the activation node, the local breakout service of the service data, and switching the obtained activation node to the backup node.

4. The service disaster recovery backup method according to any one of claims 1 to 3, wherein after publishing the service data abstract with the identifier of the first TOF node as the keyword in the cluster, the method further comprises:
in response to detecting that the backup node exits the cluster, or content of the service data changes, updating the service data abstract, and publishing the updated service data abstract in the cluster.

5. The service disaster recovery backup method according to claim 4, wherein detecting that the backup node exits the cluster comprises:
in response to detecting that the backup node is disconnected and a keep-alive message between the first TOF node and a subordinate base station is normally reachable, determining that the backup node exits the cluster.

6. The service disaster recovery backup method according to any one of claims 1 to 3, wherein selecting the second TOF node as the backup node in the cluster comprises:
selecting the second TOF node as the backup node according to a logical distance between the first TOF node and each TOF node in the cluster;
after publishing the service data abstract with the identifier of the first TOF node as the keyword in the cluster, the method further comprises:
after detecting that there is a newly added third TOF node in the cluster, and a logical distance between the third TOF node and the first TOF node is smaller than a logical distance between the second TOF node and the first TOF node, updating the backup node to the third TOF node; and
updating the service data abstract, and publishing the updated service data abstract in the cluster.

7. The service disaster recovery backup method according to any one of claims 1 to 3, wherein selecting the second TOF node as the backup node in the cluster comprises:
selecting, in the cluster, the second TOF node whose node role is a disaster recovery role as the backup node.

8. The service disaster recovery backup method according to any one of claims 1 to 3, wherein the cluster comprises a distributed hash table, DHT, cluster; the method further comprising:
in response to that the first TOF node is a first node of the cluster, building the DHT cluster in a role of a seed node; and
in response to that the first TOF node is not the first node of the cluster, joining the DHT cluster with the seed node in the DHT cluster as an intermediary.

9. A service disaster recovery backup method, applied to a second traffic offload, TOF, node, **characterized by** comprising:
after joining a cluster of TOF nodes, receiving a service data abstract with an identifier of a first TOF node as a keyword published in the cluster, wherein the service data abstract comprises an activation node and a backup node of service data;
in response to detecting that the backup node in the service data abstract is the second TOF node, synchronizing service data of the first TOF node with the first TOF node, and taking over a local breakout service of the service data of the first TOF node after detecting a failure of the first TOF node; and
updating the service data abstract, and publishing an updated service data abstract in the cluster.

10. The service disaster recovery backup method according to claim 9, wherein taking over the local breakout service of the service data of the first TOF node after detecting the failure of the first TOF node comprises:
in response to detecting that the first TOF node is disconnected and a keep-alive message between the second TOF node and a subordinate base station is normally reachable, taking over the local breakout service of the service data of the first TOF node.

11. A service disaster recovery backup system, **characterized by** comprising: at least one first traffic offload, TOF, node and at least one second TOF node;
wherein the first TOF node is configured to perform the service disaster recovery backup method according to any one of claims 1 to 8, and the second TOF node is configured to perform the service disaster recovery backup method according to claim 9 or 10.

12. A traffic offload, TOF, node, **characterized by** comprising:
at least one processor; and
a memory communicated with the at least one processor,
wherein an instruction executable by the at least one processor is stored in the memory, and the instruction is executed by the at least one processor to enable the at least one processor to perform the service disaster recovery backup method according to any one of claims 1 to 8, or perform the service disaster recovery backup method according to claim 9 or 10.

13. A computer-readable storage medium, **characterized in that** a computer program is stored in the computer-readable storage medium, when the computer program is executed by a processor, the service disaster recovery backup method according to any one of claims 1 to 8 is implemented, or the service disaster recovery backup method according to claim 9 or 10 is implemented.
